# FASCICULE DE BREVET EUROPEEN

(11) **EP 1 616 685 B1**
(45) Date de publication et mention de la délivrance du brevet: **21.05.2008**
(21) Numéro de dépôt: 05291530.3
(22) Date de dépôt: 18.07.2005
(51) Int. Cl.: B29C 45/56

(54) **Procédé d'injection-compression pour la fabrication d'une pièce en matière plastique**
Spritzprägeverfahren zur Herstellung eines Kunststoffgegenstandes
Injection compression moulding method for producing a plastic part

(30) Priorité: 16.07.2004 FR 0407939
(43) Date de publication de la demande: 18.01.2006
(73) Titulaire: COMPAGNIE PLASTIC OMNIUM, 69007 Lyon (FR)
(72) Inventeur: Gille, Denis, 01810 Bellignat (FR); Agassant, Antoine, 69003 Lyon (FR); Demule Thenon, Christophe, 01150 Chazey Sur Ain (FR)
(74) Mandataire: de la Bigne, Guillaume Michel Marie

(56) Documents cités:
- EP-A- 0 704 290
- US-A- 4 519 763
- US-A- 4 715 804
- US-A- 5 478 520
- JAEGER A ET AL: "THE ECONOMICAL AND FLEXIBLE ALTERNATIVE TO LAMINATING" PLASTVERARBEITER, ZECHNER UND HUETHIG VERLAG GMBH. SPEYER/RHEIN, DE, vol. 2, no. 2, 1 octobre 1991 (1991-10-01), pages 30-32,34, XP000263480 ISSN: 0032-1338

## Description

La présente invention concerne un procédé d'injection-compression pour la fabrication d'une pièce en matière plastique.

Pour fabriquer de telles pièces, par exemple des pièces de carrosserie de véhicule automobile, il est courant d'utiliser l'injection classique, consistant à injecter de la matière plastique à l'état visqueux dans un moule fermé définissant une cavité de volume constant, puis à ouvrir le moule une fois la matière solidifiée. On connaît également l'injection-compression, ou plus précisément l'extrusion-compression, consistant à introduire la matière plastique à l'état visqueux en un endroit d'un moule en position semi-ouverte, à refermer le moule de façon à répartir cette matière plastique dans tout le moule, puis à ouvrir le moule une fois la matière plastique solidifiée.

Un problème connu dans ces procédés consiste en ce que la matière plastique se rétracte en refroidissant, et comme ce retrait n'est pas toujours homogène sur la pièce, celle-ci peut avoir tendance à vriller. Ainsi, outre le fait qu'il cause un certain nombre de rebus parmi les pièces fabriquées, le retrait oblige le constructeur à renoncer à certaines formes de pièces en matière plastique, par exemple les pièces relativement longues.

Pour remédier à ce problème, lors du procédé d'injection classique, les transformateurs de matière plastique ont l'habitude de maintenir une pression d'injection lorsque la matière plastique est en train de refroidir dans le moule, afin que de la matière plastique supplémentaire vienne combler les endroits dans le moule où la matière s'est rétractée. Pour remédier au même problème lors du procédé d'injection-compression, les transformateurs prévoient, lors de la fermeture du moule, une phase finale de compactage consistant à réduire encore légèrement le volume de la cavité du moule au cours du refroidissement de la matière plastique, de façon que celle-ci reste comprimée contre toutes les parois du moule.

Cependant, le retrait demeure hétérogène dans ces procédés, ce qui ne permet pas de résoudre de façon satisfaisante les problèmes énoncés ci-dessus.

Les inventeurs à l'origine de la présente invention se sont rendu compte qu'il est possible d'obtenir une homogénéisation du retrait plus satisfaisante que dans les procédés connus.

Le document EP-A-0704290 décrit un procédé selon le préambule de la revendication 1.

A cet effet, la présente invention a pour objet un procédé d'injection-compression pour la fabrication d'une pièce en matière plastique, utilisant un moule définissant une cavité de volume variable (V), procédé dans lequel on place le moule dans une positon d'avant-compression au début de l'injection d'une quantité prédéfinie de matière plastique et on l'amène à une position d'après-compression à la fin de l'injection, la quantité de matière plastique injectée passant d'un volume à chaud (V_{chaud}) au moment où elle est injectée dans le moule à un volume à froid (V_{froid}) lorsqu'elle est refroidie Dans le procédé,
- on place le moule en position d'avant-compression de manière que le volume (V) de la cavité soit sensiblement égal au volume à chaud (V_{chaud}) de la quantité de matière plastique ; et
- on amène le moule en position d'après-compression de manière que le volume de la cavité soit sensiblement égal au volume à froid (V_{froid}) de la quantité de matière plastique. L'invention est défini par les caractéristiques de la revendication 1.

Par « position d'avant-compression », on entend la position dans laquelle se trouve le moule lorsque l'on commence à injecter la matière plastique à l'intérieur. Par « position d'après-compression », on entend la position dans laquelle se trouve le moule lorsque la matière plastique injectée est solidifiée et que la pièce est sur le point d'être éjectée du moule.

Ainsi, l'invention consiste à remplir l'intégralité de la cavité par la matière plastique lorsque le moule est en position d'avant-compression, de façon que la fermeture du moule accompagne uniquement le retrait de la matière plastique. Dans ce procédé, la course de fermeture du moule sert uniquement à compenser le retrait de la matière plastique, contrairement au procédé d'injection-compression de l'état de la technique dans lequel la course de fermeture du moule permet à la fois le remplissage du moule et la compensation du retrait de la matière plastique. Il en résulte que la pièce en matière plastique réalisée subit un retrait plus homogène qui diminue sa tendance à vriller, ce qui limite le nombre de rebus lors de la fabrication en série et permet également de fabriquer des pièces, notamment des pièces de carrosserie, dont la forme était auparavant rédhibitoire en raison des problèmes de retrait.

De plus, il est à noter que la course effectuée par le moule entre sa position d'avant-compression et sa position d'après-compression est plus petite que celle effectuée par le moule lors du procédé d'injection-compression classique.

Par ailleurs, du fait que toute la matière est injectée en une seule fois, à la différence de l'injection classique où de la matière est rajoutée pour compenser le retrait, les pièces fabriquées subissent moins de tensions internes, ce qui leur procure un meilleur comportement par rapport aux conditions climatiques, et présentent une meilleure géométrie.

En outre, les inventeurs ont observé que la valeur du retrait de la matière plastique au cours de ce procédé était plus faible que dans l'injection classique.

Enfin, le procédé selon l'invention est particulièrement économique puisque pour le mettre en oeuvre, il n'est pas utile de modifier un parc de presses déjà utilisé pour l'injection-compression connue.

Selon l'invention, on injecte la matière plastique de façon séquentielle, c'est à dire que la matière plastique est injectée en plusieurs points et éventuellement à des moments différents dans le moule. Ce type d'injection est également connu sous le nom d'« injection en cascade ». L'injection séquentielle est particulièrement intéressante car elle permet de mieux contrôler le remplissage du moule et d'assurer un meilleur contact de la matière plastique avec la paroi du moule. Ce contact est plus rapide, ce qui évite d'avoir des traces de reprises de flux à la surface de la pièce et permet d'obtenir des pièces comportant moins de contraintes internes. Or, il est difficile d'injecter la matière de façon séquentielle dans les procédés d'injection-compression de l'état de la technique car cela demande de remplir environ 80% du moule, la fin du remplissage du moule étant effectuée par la compression du moule. Il est alors impossible de contrôler la position des lignes de soudure résultant de la rencontre des différents fronts de matière. Dans le procédé selon l'invention, comme la compression n'a lieu qu'une fois que le moule est rempli à 100%, le remplissage peut se faire de façon séquentielle, tout en contrôlant la position des lignes de soudure sur la pièce, de façon par exemple qu'elles se positionnent sur des parties non visibles de la pièce.

Le moule comprend généralement deux parties, l'une des deux parties étant mobile par rapport à l'autre de façon être déplacée, par rapport à l'autre partie, d'une certaine distance lorsque le moule passe de la position d'avant-compression à la position d'après-compression. De préférence, le rapport de cette distance sur l'épaisseur moyenne de la cavité lorsque le moule est en position d'après-compression est compris entre 0,1 et 1. Ainsi, la distance parcourue par le moule lorsqu'il passe de la position d'avant-compression à la position d'après-compression est relativement faible, comparée à la distance parcourue dans le procédé connu d'injection-compression. Cette faible distance de parcours permet d'avoir un temps de cycle plus court que lors de l'injection-compression connue, dans laquelle le rapport est généralement supérieur à 1, et donc d'avoir un meilleur rendement de production.

Un procédé selon l'invention peut en outre comporter l'une ou plusieurs des caractéristiques suivantes :
- le rapport de la distance sur l'épaisseur moyenne est sensiblement égal à 0,2 ;
- la distance parcourue par la partie mobile relativement à l'autre partie est réglée par une cale ;
- la cale est d'épaisseur variable ;
- le moule passe de la position d'avant-compression à la position fermée grâce à une presse hydraulique ;
- le moule passe de la position d'avant-compression à la position fermée grâce à une presse mécanique ; et
- la pièce obtenue est une pièce de véhicule automobile.

L'invention sera mieux comprise à la lecture de la description qui va suivre, donnée uniquement à titre d'exemple et faite en se référant aux dessins annexés dans lesquels :
- la figure 1 est une coupe schématique d'un moule en position d'avant-compression permettant la mise en oeuvre d'un procédé selon un premier mode de réalisation de l'invention ;
- la figure 2 représente le moule de la figure 1 en position d'après-compression ;
- la figure 3 est une coupe schématique d'un moule en position d'avant-compression permettant la mise en oeuvre d'un procédé selon un second mode de réalisation de l'invention ; et
- la figure 4 représente le moule de la figure 3 en position d'après-compression.

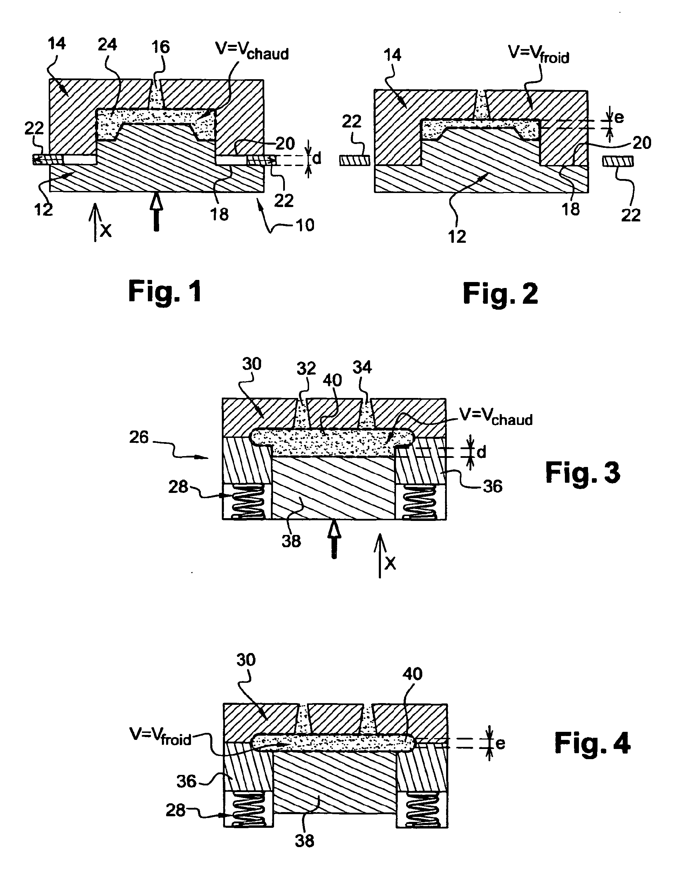

Un moule 10 d'injection-compression selon l'invention comporte deux parties 12, 14, représentées sur la figure 1. La partie 14 est agencée à la sortie d'une vis d'injection, non représentée, de sorte que de la matière plastique pénètre dans le moule à travers un canal d'injection 16 ménagé dans la partie 14.

Les parties 12 et 14 du moule 10 sont mobiles l'une par rapport à l'autre. Dans ce mode de réalisation, la partie 14 est fixe et la partie 12 peut se déplacer dans la direction X. Les parties 12, 14 forment un moule à plan de joint positif, elles comportent chacune une surface de jointure 18, 20, espacées entre elles d'une distance d lorsque le moule est en position d'avant-compression et accolées lorsque le moule est en position d'après-compression, telle que représentée sur la figure 2.

En position d'avant-compression, les deux parties 12, 14 sont maintenues espacées grâce à des cales 22, agencées entre les deux surfaces 18, 20. Les cales 22 peuvent être d'épaisseur variable pour faciliter leur utilisation.

Les deux parties 12, 14 définissent entre elles une cavité 24, destinée à recevoir la matière plastique injectée venant du canal 16. Cette cavité 24 a un volume variable V, selon que le moule est en position d'avant-compression ou en position d'après-compression.

Le procédé d'injection-compression de matière plastique pour la fabrication d'une pièce va à présent à être décrit, en référence aux figures 1 et 2.

Au début de l'injection, le moule est en position d'avant-compression. On injecte alors de la matière plastique à l'état visqueux à travers le canal 16. Le volume de matière plastique injecté pour remplir toute la cavité 24 correspond à un volume V_{chaud}. Ainsi, le volume V de la cavité 24, lorsque le moule est en position d'avant-compression, est égal au volume V_{chaud}.

Une fois la cavité 24 remplie, alors que la matière plastique injectée dans la cavité 24 a commencé son refroidissement, on retire les cales 22 du moule 10 et on exerce une force de fermeture sur la partie mobile 12, de façon à diminuer la distance entre les deux parties 12, 14 et à amener le moule à la position d'après-compression.

En déplaçant la partie 12, le volume V de la cavité 24 diminue. Cette diminution de volume accompagne le retrait dû au refroidissement de la matière plastique injectée dans la cavité 24.

Lorsque le moule est en position d'après-compression, la cavité 24 a un volume V sensiblement égal au volume V_{froid} de la matière plastique à l'état solide.

Ainsi, la course de fermeture d du moule permet de compenser uniquement le retrait de la matière plastique, le remplissage de la cavité 24 ayant eu lieu intégralement avant de fermer le moule.

A la fin de l'injection, la pièce solide en matière plastique, contenue dans la cavité 24, a une épaisseur moyenne e. Le rapport d/e de la distance d de déplacement relatif des deux parties 12, 14 du moule sur l'épaisseur moyenne e de la pièce fabriquée est compris entre 0,1 et 1.

De préférence, il est d'environ 20%. Ainsi, pour une pièce dont l'épaisseur moyenne e est comprise entre 2 et 4 millimètres, la distance d séparant les deux parties du moule est comprise entre 0,4 et 0,8 millimètres.

Un moule 26, selon un autre mode de réalisation illustré par les figures 3 et 4, comprend deux parties 28, 30. La partie 30 comporte deux canaux d'injection 32, 34, par lesquels de la matière plastique est injectée de façon séquentielle.

La partie 28 comporte une chambre de compression fixe 36 et un noyau mobile 38. Comme cela est connu, le noyau 38 peut bouger dans la direction X sous l'effet d'une force exercée par une presse mécanique ou une presse hydraulique, tandis que la chambre de compression 36 demeure plaquée contre la partie 30 du moule par un moyen de rappel élastique. Le moule 26 définit une cavité 40, dont le volume V peut varier en fonction de la position du noyau 38.

Lors de l'injection-compression de matière plastique dans le moule 26, le moule est tout d'abord en position d'avant-compression, telle que représentée sur la figure 3, de façon à injecter un volume de matière plastique V_{chaud} à l'intérieur de la cavité 40. A ce moment-là, le noyau 38 est positionné de manière que le volume V de la cavité 40 soit égal au volume V_{chaud}.

Simultanément au refroidissement de la matière plastique injectée, et donc à son retrait, on exerce une force sur le noyau 38 de façon à réduire le volume V de la cavité 40. La cavité 40, une fois que le moule est dans la position d'après-compression, a un volume V égal au volume V_{froid} de la matière plastique à l'état solide.

Ainsi, grâce à l'invention, la compression du moule, qui passe de la position d'avant-compression à la position d'après-compression, a pour fonction d'accompagner le retrait de la matière plastique, ce qui permet d'avoir des pièces dont le retrait est relativement homogène, et diminue la tendance à vriller de ces pièces.

## Revendications

1. Procédé d'injection-compression pour la fabrication d'une pièce en matière plastique, utilisant un moule (12, 14, 28, 30) définissant une cavité (24, 40) de volume variable (V), procédé dans lequel on injecte la matière plastique de façon séquentielle et dans lequel on place le moule dans une positon d'avant-compression au début de l'injection d'une quantité prédéfinie de matière plastique et on l'amène à une position d'après-compression à la fin de l'injection, la quantité de matière plastique injectée passant d'un volume à chaud (V_{chaud}) au moment où elle est injectée dans la cavité (24, 40) à un volume à froid (V_{froid}) lorsqu'elle est refroidie et solidifiée, **caractérisé en ce que :**
- on place le moule en position d'avant-compression de manière que le volume (V) de la cavité (24, 40) soit égal au volume à chaud (V_{chaud}) de la quantité de matière plastique ; et
- on amène le moule en position d'après-compression de manière que le volume (V) de la cavité (24, 40) soit égal au volume à froid (V_{froid}) de la quantité de matière plastique.

2. Procédé selon la revendication 1, la cavité ayant une épaisseur moyenne (e) lorsque le moule est en position d'après-compression, le moule comprenant deux parties, l'une des deux parties étant mobile par rapport à l'autre de façon être déplacée, par rapport à l'autre partie, d'une certaine distance (d) lorsque le moule passe de la position d'avant-compression à la position d'après-compression, procédé dans lequel on place le moule en position d'avant-compresseur de manière que le rapport de la distance (d) sur l'épaisseur moyenne (e) est compris entre 0,1 et 1.

3. Procédé selon la revendication 2, dans lequel le rapport de la distance (d) sur l'épaisseur moyenne (e) est sensiblement égal à 0.2.

4. Procédé selon la revendication 2 ou 3, dans lequel la distance (d) parcourue par la partie mobile relativement à l'autre partie est réglée par une cale (22).

5. Procédé selon la revendication 4, dans lequel la cale (22) est d'épaisseur variable.

6. Procédé selon l'une quelconque des revendications 1 à 5, dans lequel le moule passe de la position d'avant-compression à la position d'après-compression grâce à une presse hydraulique.

7. Procédé selon l'une quelconque des revendications 1 à 6, dans lequel le moule passe de la position d'avant-compression à la position d'après-compression grâce à une presse mécanique.

8. Procédé selon l'une quelconque des revendications 1 à 7, pour la fabrication d'une pièce de véhicule automobile, notamment une pièce de carrosserie.

## Claims

1. An injection-compression method for fabricating a part out of plastics material by using a mold (12, 14, 28, 30) defining a cavity (24, 40) of variable volume (V), in which method plastics material is injected in sequential manner and the mold is placed in a pre-compression position at the beginning of the injection of a predefined quantity of plastics material, and is brought to a post-compression position at the end of the injection, the injected quantity of plastics material passing from a hot volume (Vₕₒₜ) at the time it is injected into the cavity (24, 40) to a cold volume (V_{cold}) once it has cooled and solidified, the method being **characterized in that**:
· the mold is placed in the pre-compression position so that the volume (V) of the cavity (24, 40) is equal to the hot volume (Vₕₒₜ) of the quantity of plastics material; and
· the mold is taken to the post-compression position in such a manner that the volume (V) of the cavity (24, 40) is equal to the cold volume (V_{cold}) of the quantity of plastics material.

2. A method according to claim 1, the cavity having a mean thickness (e) when the mold is in the post-compression position, the mold comprising two portions, one of the two portions being movable relative to the other so as to be moved relative to the other portion through a certain distance (d) when the mold passes from the pre-compression position to the post-compression position, in which method the mold is placed in the pre-compression position in such a manner that the ratio of the distance (d) over the mean thickness (e) lies in the range 0.1 to 1.

3. A method according to claim 2, in which the ratio of the distance (d) over the mean thickness (e) is substantially equal to 0.2.

4. A method according to claim 2 or claim 3, in which the distance (d) traveled by the movable portion relative to the other portion is adjusted by a spacer (22).

5. A method according to claim 4, in which the spacer (22) is of varying thickness.

6. A method according to any one of claims 1 to 5, in which the mold is taken from the pre-compression position to the post-compression position by a hydraulic press.

7. A method according to any one of claims 1 to 6, in which the mold is taken from the pre-compression position to the post-compression position by a mechanical press.

8. A method according to any one of claims 1 to 7, for fabricating a motor vehicle part, in particular a bodywork part.

## Patentansprüche

1. Spritzgieß- und Pressverfahren zur Herstellung eines Kunststoffteils, das eine Form (12, 14, 28, 30) verwendet, die einen Hohlraum (24, 40) mit variablem Volumen (V) bildet, wobei in diesem Verfahren der Kunststoff sequenziell eingespritzt wird und die Form zu Beginn des Einspritzens einer vordefinierten Kunststoffmenge in eine Position vor dem Pressen und am Ende des Einspritzens in eine Position nach dem Pressen gebracht wird, wobei die eingespritzte Kunststoffmenge von einem Warmvolumen (V_{warm}) zum Zeitpunkt, in dem sie in den Hohlraum (24, 40) eingespritzt wird, zu einem Kaltvolumen (Vₖₐₗₜ) übergeht, wenn sie abgekühlt und erstarrt ist, **dadurch gekennzeichnet, dass**:
- die Form solchermaßen in einer Position vor dem Pressen angeordnet wird, dass das Volumen (V) des Hohlraums (24, 40) gleich dem Warmvolumen (V_{warm}) der Kunststoffmenge ist; und
- die Form solchermaßen in eine Position nach dem Pressen gebracht wird, dass das Volumen (V) des Hohlraums (24, 40) gleich dem Kaltvolumen (Vₖₐₗₜ) der Kunststoffmenge ist.

2. Verfahren nach Anspruch 1, wobei der Hohlraum eine durchschnittliche Dicke (e) aufweist, wenn sich die Form in der Position nach dem Pressen befindet, wobei die Form zwei Teile umfasst, wobei einer der beiden Teile derart bezüglich des anderen Teils beweglich ist, dass er bezüglich des anderen Teils um einen bestimmten Abstand (d) verlagert wird, wenn die Form von der Position vor dem Pressen in die Position nach dem Pressen übergeht, wobei in diesem Verfahren die Form solchermaßen in der Position vor dem Pressen angeordnet wird, dass das Verhältnis des Abstands (d) zu der durchschnittlichen Dicke (e) zwischen 0,1 und 1 beträgt.

3. Verfahren nach Anspruch 2, bei dem das Verhältnis des Abstands (d) zu der durchschnittlichen Dicke (e) im Wesentlichen gleich 0,2 ist.

4. Verfahren nach Anspruch 2 oder 3, bei dem der Abstand (d), der von dem beweglichen Teil im Verhältnis zu dem anderen Teil zurückgelegt wird, durch einen Keil (22) reguliert wird.

5. Verfahren nach Anspruch 4, bei dem der Keil (22) eine variable Dicke aufweist.

6. Verfahren nach einem der Ansprüche 1 bis 5, bei dem die Form mithilfe einer hydraulischen Presse von der Position vor dem Pressen in die Position nach dem Pressen übergeht.

7. Verfahren nach einem der Ansprüche 1 bis 5, bei dem die Form mithilfe einer mechanischen Presse von der Position vor dem Pressen in die Position nach dem Pressen übergeht.

8. Verfahren nach einem der Ansprüche 1 bis 7 zur Herstellung eines Kraftfahrzeugteils, insbesondere eines Karosserieteils.
